# EUROPÄISCHE PATENTSCHRIFT

(11) **EP 2 765 366 B1**
(45) Veröffentlichungstag und Bekanntmachung des Hinweises auf die Patenterteilung: **19.11.2025**
(21) Anmeldenummer: 14000453.2
(22) Anmeldetag: 07.02.2014
(51) Int. Cl.: F28F 9/02, F28D 1/04, F28F 1/20

(54) **Flächenwärmetauscherelement, Verfahren zur Herstellung eines Flächenwärmetauscherelementes und Werkzeug**
Area heater element, method for producing same and tool
Élément d'échangeur de chaleur à surface raclée, procédé de fabrication d'un élément d'échangeur de chaleur à surface raclée et outil

(30) Priorität: 07.02.2013 DE 102013002053; 23.05.2013 DE 102013008717
(43) Veröffentlichungstag der Anmeldung: 13.08.2014
(73) Patentinhaber: Schmöle GmbH, 58730 Fröndenberg (DE)
(72) Erfinder: Bitter, Dieter, 57413 Finnentrop (DE); Rosenwirth, Andreas, 32130 Enger (DE); Bitter, Kristina, 44139 Dortmund (DE)
(74) Vertreter: Roche, von Westernhagen & Ehresmann

(56) Entgegenhaltungen:
- EP-A1- 1 482 258
- EP-A2- 0 806 617
- EP-A2- 1 167 893
- DE-A1- 2 901 304
- DE-U1- 202010 005 305

## Beschreibung

Die Erfindung betrifft zunächst ein Flächenwärmetauscherelement nach dem Oberbegriff des Anspruches 1.

Flächenwärmetauscherelemente der gattungsgemäßen Art werden von der Anmelderin seit geraumer Zeit entwickelt und vertrieben. Insbesondere ist in diesem Zusammenhang zu verweisen auf die EP 1 426 721 B1 der Anmelderin, die bereits ein Flächenwärmetauscherelement des Standes der Technik zeigt, bei dem ein mäandrig ausgebildetes Rohrleitungssystem unter Zuhilfenahme von Wärmeübertragungsblechen auf einer Trägerplatte festgelegt wird.

Ein vergleichbares Flächenwärmetauscherelement, welches als Absorber ausgebildet ist, und ebenfalls teilweise auf die Anmelderin zurück geht, ist in der EP 2 116 793 A2 beschrieben. Hier wird der Rohrquerschnitt, zumindest der Rohrquerschnitt der geradlinigen Leitungsabschnitte, D-förmig verformt, um einen noch besseren thermischen Kontakt zu erzielen.

Ausgehend von dem zuletzt beschriebenen Flächenwärmetauscherelement des Standes der Technik liegt der Erfindung die Aufgabe zugrunde, das bekannte Flächenwärmetauscherelement derartig weiterzuentwickeln, dass es unter geringem Materialeinsatz mit einfachen Mitteln herstellbar ist.

Die Erfindung löst diese Aufgabe mit den Merkmalen des Anspruches 1.

Das erfindungsgemäße Flächenwärmetauscherelement umfasst eine Trägerplatte, die quadratisch, oder rechteckig ausgebildet ist. Sie besteht insbesondere aus Metall.

Für den Fall, dass das Flächenwärmetauscherelement gemäß einer ersten Alternative der Erfindung als Absorber ausgebildet ist, d. h. als Sonnen-Kollektorpaneel, ist die Trägerplatte vorteilhafterweise von einer Glasplatte flächig überdeckt, und gemeinsam mit der Glasplatte in einem Rahmen, wie man ihn von Fensterelementen her kennt, gehalten. Das als Absorber ausgebildete Flächenwärmetauscherelement kann in diesem Fall auf einem Gebäudedach montiert oder als Fassadenelement eingesetzt werden.

Gemäß einer zweiten Alternative der Erfindung ist das erfindungsgemäße Flächenwärmetauscherelement als vorkonfektioniertes Paneel einer in einem Gebäuderaum montierbaren Gebäudedecke, einer sogenannten Heiz- oder Kühldecke, ausgebildet. Die Trägerplatte kann entweder aus Metall bestehen, und mit einer Deckschicht, z. B. einer Gipskartonplatte, in Kontakt stehen. Alternativ besteht auch die Möglichkeit, dass die Trägerplatte unmittelbar als Gipskartonplatte ausgebildet ist.

Das erfindungsgemäße Flächenwärmetauscherelement weist ein Rohrleitungssystem auf, welches an der Trägerplatte festgelegt ist. Das Rohrleitungssystem kann gekrümmte und geradlinige Leitungsabschnitte aufweisen. Zumindest die geradlinigen Leitungsabschnitte sind unter Zuhilfenahme von Wärmeübertragungsblechen an der Trägerplatte festgelegt. Die Wärmeübertragungsbleche sind von streifenförmigen, metallischen, insbesondere aus Aluminium bestehenden, dünnen Blechen oder Folien bereitgestellt. Diese können Klebemittel aufweisen, und sind in Folge der Klebung an der Trägerplatte festgelegt. Diese Wärmeübertragungsbleche können einen nutförmigen Kanal aufweisen, den sogenannten Leitungsabschnitt-Aufnahmekanal, in den hinein der geradlinige Leitungsabschnitt eingesetzt wird.

Im fertig montierten Zustand sind die geradlinigen Leitungsabschnitte somit zwischen Wärmeübertragungsblech und Trägerplatte angeordnet.

Das erfindungsgemäße Flächenwärmetauscherelement weist einen Eingangsanschluss und einen Ausgangsanschluss auf. Der Eingangsanschluss und der Ausgangsanschluss dienen der Verbindung des Flächenwärmetauscherelementes mit benachbarten Flächenwärmetauscherelementen zur Erzielung einer Reihenschaltung mehrerer Flächenwärmetauscherelemente. Das durch das Rohrleitungssystem des erfindungsgemäßen Flächenwärmetauscherelementes hindurch strömende Fluid, beispielsweise Wasser, tritt durch den Eingangsanschluss in das Rohrleitungssystem des Flächenwärmetauscherelementes ein, und verlässt das Rohrleitungssystem durch den Ausgangsanschluss.

Der Eingangsanschluss weist einen Anschlussrohrabschnitt auf, der einen Anschlussquerschnitt aufweist. Das erfindungsgemäße Flächenwärmetauscherelement weist - wie im Übrigen auch ein Flächenwärmetauscherelement des Standes der Technik - vorteilhafterweise Anschlussrohrabschnitte mit großen Anschlussquerschnitten von z. B. 12 mm auf. Bei Varianten und Ausführungen des erfindungsgemäßen Flächenwärmetauscherelementes können auch andere Anschlussrohrquerschnitte, wie beispielsweise Querschnitte zwischen 9 mm und 18 mm, in Betracht kommen. Als Rohrquerschnitt wird im Rahmen der vorliegenden Patentanmeldung, soweit keine abweichenden Angaben gemacht sind, in der Regel der Außendurchmesser des jeweiligen Rohres oder Rohrabschnittes bezeichnet.

Das erfindungsgemäße Flächenwärmetauscherelement ist dadurch gekennzeichnet, dass im Leitungsweg zwischen Eingangsanschluss und Ausgangsanschluss wenigstens zwei Leitungszweige mit jeweils wenigstens einem geradlinig ausgebildeten Leitungsabschnitt vorgesehen sind. Es handelt sich somit um parallel geschaltete und/oder zumindest teilweise parallel geführte Leitungszweige. Die geradlinigen Leitungsabschnitte sind entlang einer gemeinsamen Strömungsrichtung parallel durchströmt.

Die erfindungsgemäße Besonderheit besteht darin, dass die Leitungsabschnitte einen gleichen Rohrquerschnitt aufweisen, der kleiner ist als der Anschlussquerschnitt.

Während die Anschlussquerschnitte in der Regel genormt sind, um beispielsweise den Handwerkern während der Montage der Flächenwärmetauscherelemente am Einsatzort eine Benutzung standardisierter Materialien und Werkzeuge zu ermöglichen, sind die innerhalb des Flächenwärmetauscherelementes zwischen Eingangsanschluss und Ausgangsanschluss verlaufenden parallelen Leitungszweige erfindungsgemäß mit einem kleineren Rohrquerschnitt versehen. Dies ermöglicht bei gleichbleibender oder sogar verbesserter Kühlleistung zum Einen einen geringeren Materialeinsatz der in der Regel aus Kupfer bestehenden Rohrleitungssysteme. Zum Anderen besteht nun der wesentliche Vorteil, dass auf Grund des kleineren Rohrquerschnittes das insgesamt im Flächenwärmetauscherelement befindliche Volumen an Strömungsmedium, also beispielsweise an Wasser, deutlich geringer gehalten werden kann, als beim Stand der Technik.

Diese geringeren Volumina an Strömungsfluid in dem Flächenwärmetauscherelement ermöglichen erfindungsgemäß zum Einen kürze Anfahrzeiten. Zum Anderen werden hierdurch die Verdampfungsprobleme, die bei bekannten Anlagen auftreten, die Flächenwärmetauscherelemente des Standes der Technik verwenden, reduziert.

Flächenwärmetauscherelemente des Standes der Technik verwenden grundsätzlich Rohrquerschnitte von 12 mm, da die für die Anschlusstechnik eingesetzten Werkzeuge auf diese Rohrquerschnitte ausgelegt sind. Bei kleineren Rohrquerschnitten von zwischen 6 mm und 9 mm kann das in einem Flächenwärmetauscherelement befindliche Standvolumen demgegenüber erheblich reduziert werden.

Schließlich bieten die erfindungsgemäß niedrigeren Querschnitte den Vorteil, dass turbulente Strömungen des Strömungsfluids innerhalb des Rohrleitungssystems einfacher erreicht werden können.

Aus der DE 20 2010 005 305 U1 geht ein Absorber hervor, der mehrere parallele Leitungszweige aufweist, die unterschiedliche Leitungsquerschnitte aufweisen.

Aus der EP 1 167 893 A2 geht ein Sonnenkollektor hervor. Hier ist nicht beschrieben, dass die Leitungsabschnitte parallel geschalteter Leitungszweige einen gleichen Rohrquerschnitt aufweisen, der kleiner ist als der Anschlussquerschnitt.

Eine wesentliche Besonderheit einer weiteren vorteilhaften Ausgestaltung der Erfindung besteht darin, dass das Rohrleitungssystem mehrere parallele Leitungszweige aufweist. Durch diese hindurch wird ein Strömungsfluid jeweils entlang einer im Wesentlichen U-förmigen Bewegungsbahn entlang der Trägerplatte geführt.

Während Flächenwärmetauscherelemente der gattungsgemäßen Art des Standes der Technik in der Regel eine mäandrige Führung des Rohrleitungssystems vorsehen, gelingt es mit der erfindungsgemäß vorgeschlagenen Geometrie, mehrere parallele Leitungszweige einzusetzen, und den Volumenstrom durch das Flächenwärmetauscherelement so auf mehrere Leitungszweige aufzuteilen.

Die Anordnung und Ausbildung der Leitungszweige derart, dass eine Führung des Strömungsfluides entlang einer im Wesentlichen U-förmigen Bewegungsbahn entlang der Trägerplatte erfolgt, ermöglicht eine Vergleichmäßigung, d. h. eine Homogenisierung, des Wärmetausches entlang der gesamten Fläche der Trägerplatte. Hierdurch kann ein optimierter Wärmetausch erzielt werden.

Gemäß einer vorteilhaften Ausgestaltung der Erfindung sind die parallelen Leitungszweige gleichmäßig verteilt entlang der Trägerplatte angeordnet. Dies ermöglicht einen optimierten Wärmetausch bei geringem Materialeinsatz.

Gemäß einer weiteren vorteilhaften Ausgestaltung der Erfindung beschreiben die parallel geführten Leitungszweige entlang der Trägerplatte eine im Wesentlichen U-förmige Bahn. Hierdurch kann vorteilhaft erreicht werden, dass im Wesentlichen sämtliche Abschnitte oder Bereiche der Trägerplatte am Wärmetausch teilnehmen.

Gemäß einer weiteren vorteilhaften Ausgestaltung der Erfindung weisen die einzelnen Leitungszweige unterschiedlich lange U-Schenkel - bezogen auf die U-förmige Bewegungsbahn - auf. Als U-Schenkel werden die beiden Längsschenkel eines U, bzw. dessen Querschenkel bezeichnet. Die geometrische Anordnung der parallel geführten Leitungszweige kann beispielsweise derart getroffen sein, dass, ausgehend von einem Eingangsanschluss, eine Verzweigung auf mehrere Leitungszweige vorgesehen ist, und die Leitungszweige jeweils für sich im Wesentlichen U-förmig verlaufend ausgebildet sind, aber unterschiedlich lange U-Längsschenkel und/oder unterschiedlich lange U-Querschenkel aufweisen.

Bei einer vorteilhaften Ausgestaltung der Erfindung ist vorgesehen, dass unterschiedliche Leitungszweige gleich lange U-Längsschenkel, aber unterschiedlich lange U-Querschenkel aufweisen. Diese Ausgestaltung bietet insbesondere den Vorteil, dass ein Parallel-Führungsbereich zugelassen ist, der eine einfache Fertigung des Rohrleitungssystems erlaubt.

An dieser Stelle sei angemerkt, dass die Formulierung, wonach die Leitungszweige im Wesentlichen U-förmig ausgebildet sind, solche Abschnitte der Leitungszweige unberücksichtigt lässt, die entlang einem Parallel-Führungsbereich angeordnet sind.

Die Formulierung, wonach die Leitungszweige im Wesentlichen U-förmig ausgebildet sind, soll insbesondere beinhalten, dass das Strömungsfluid durch den jeweiligen Leitungszweig entlang einer im Wesentlichen U-förmigen Schleife geführt wird, und dabei einen wesentlichen Weg entlang der Trägerplatte zurücklegt.

Vorteilhafterweise ist vorgesehen, dass eine Verzweigungsstelle vorgesehen ist, an der eine Verzweigung des Eingangsanschlusses auf mehrere Leitungszweige erfolgt.

Weiter vorteilhaft kann die Verzweigungsstelle an dem Eingangsanschluss angeordnet sein.

Eine Zusammenflussstelle, an der die mehreren Leitungszweige zusammenfließen, ist vorteilhafterweise an dem Ausgangsanschluss, oder jedenfalls stromaufwärts des Ausgangsanschlusses, angeordnet.

Gemäß einer weiteren vorteilhaften Ausgestaltung der Erfindung verlaufen die mehreren parallelen Leitungszweige entlang einem Parallel-Führungsbereich stromabwärts der Verzweigungsstelle parallel zueinander.

Des Weiteren kann vorteilhaft vorgesehen sein, dass die unterschiedlichen Leitungszweige an unterschiedlichen, voneinander beabstandeten Abbiegestellen, den Parallel-Führungsbereich verlassen.

Hierdurch wird eine Geometrie möglich, die das Führen des Strömungsfluides entlang der parallelen Leitungszweige entlang einer im Wesentlichen U-förmigen Bahn entlang der Trägerplatte ermöglicht. Zugleich kann auf einfache Weise eine Fertigung eines so ausgebildeten Flächenwärmetauscherelementes erfolgen.

Bei einer alternativen Ausgestaltung der Erfindung ist vorgesehen, dass zwei Stränge von geradlinig verlaufenden Leitungsabschnitten angeordnet sind. Ein erster Strang ist von dem Strömungsfluid in einer ersten Richtung durchströmbar und der zweite, vorzugsweise zu dem ersten Strang parallel ausgerichtete Strang, ist von dem Strömungsfluid in Gegenrichtung durchströmbar.

Die beiden Stränge sind miteinander durch eine zentrale, gemeinsam durchströmte Sammelleitung verbunden. Dies ermöglicht eine besonders einfache Bauform eines Rohrleitungssystems eines erfindungsgemäßen Flächenwärmetauscherelementes, da hier die geradlinigen Leitungsabschnitte quer, d. h. im Wesentlichen senkrecht, von Sammel-Leitungsabschnitten mit einem größeren Querschnitt, abgehen können. Für weitere Ausführungen hierzu wird auf die nachfolgende Beschreibung des entsprechenden Ausführungsbeispiels in den Figuren verwiesen.

Gemäß einer weiteren vorteilhaften Ausgestaltung der Erfindung weisen die parallel geschalteter Leitungszweige zwischen einem Eingangsanschluss und einem Ausgangsanschluss die gleiche Weglänge auf. Hierdurch können die Strömungsverhältnisse innerhalb des Flächenwärmetauscherelementes optimiert werden.

Gemäß einer weiteren vorteilhaften Ausgestaltung der Erfindung weisen die Leitungsabschnitte und/oder die Leitungszweige jeweils einen kreisförmigen Rohrquerschnitt auf. Diese Ausführungsform berücksichtigt, dass bei den vorgesehenen geringen Rohrquerschnitten zwischen 6 mm und 9 mm eine Abflachung oder eine Erzielung eines D-förmigen Querschnittes eines Rohres nicht mehr erforderlich ist und ggf. sogar von Nachteil sein kann. Das erfindungsgemäße Flächenwärmetauscherelement erzielt mit kreisförmigen Rohrquerschnitten der geraden Leitungsabschnitte eine ausreichende Wärmetauschleistung.

Gemäß einer weiteren vorteilhaften Ausgestaltung der Erfindung sind die Wärmeübertragungsbleche im Wesentlichen entlang sämtlicher geradliniger Abschnitte des Rohrleitungssystems angeordnet. Hiermit wird ein optimierter Wärmetausch erreichbar. Als sämtliche geradlinigen Abschnitte des Rohrleitungssystems werden insbesondere all diejenigen geradlinigen Leitungsabschnitte angesehen, die sich im Wesentlichen entlang der gesamten Länge oder im Wesentlichen entlang der gesamten Breite der Trägerplatte erstrecken.

Gemäß einer ersten vorteilhaften Variante der Erfindung ist das Flächenwärmetauscherelement als Absorber ausgebildet. Dieses kann beispielsweise für eine fassadenseitige oder gebäudedeckenseitige Montage vorgesehen sein. Hier wird mit Hilfe des Sonnenlichtes das Strömungsfluid erwärmt und zur Gebäudeheizung verwandt. Dieses Flächenwärmetauscherelement weist typischerweise eine Glasplatte auf, die die Trägerplatte komplett überdeckt. Die Trägerplatte ist in diesem Falle in der Regel schwarz lackiert. Die Trägerplatte und die Glasscheibe sind gemeinsam in einem Rahmen angeordnet, der als fensterartiger Rahmen ausgebildet ist.

Gemäß einer zweiten alternativen Variante der Erfindung ist das Flächenwärmetauscherelement als vorkonfektioniertes Paneel einer in einem Gebäuderaum montierbaren Kühl- und/oder Heizdecke ausgebildet.

Die Erfindung bezieht sich des Weiteren auf ein Verfahren zur Herstellung eines Flächenwärmetauscherelementes nach Anspruch 11.

Aus der DE 10 2010 018 162 A1 der Anmelderin geht ein Verfahren zur Fertigung eines bekannten Flächenwärmetauscherelementes hervor.

Hiervon ausgehend liegt der Erfindung die Aufgabe zugrunde, das bekannte Verfahren derartig weiterzuentwickeln, dass die Herstellung eines Flächenwärmetauscherelementes möglich wird, welches ein Rohrleitungssystem aufweist, welches besonders kleine Rohrquerschnitte aufweist.

Die Erfindung löst diese Aufgabe mit den Merkmalen des Anspruches 11.

Die Erfindung erkennt, dass die Verformung geradliniger Leitungsabschnitte von einem kreisförmigen Querschnitt hin zu einem D-förmigen Querschnitt bei kleinen Rohrquerschnitten mit erheblichen Nachteilen verbunden sein kann. Hierdurch können die Querschnitte insgesamt so stark reduziert werden, dass die Durchströmung des Rohrleitungssystems mit einem Strömungsfluid in der gewünschten Weise nicht erreichbar ist.

Das erfindungsgemäße Verfahren sieht zur Vermeidung dieser Nachteile vor, ein Unterwerkzeug mit einer gegenüber dem Stand der Technik geänderten Aufnahme auszubilden. In die Aufnahme des Unterwerkzeugs kann ein Wärmeübertragungsblech eingesetzt werden, welches zuvor rolliert wurde, und bereits vor dem Einsetzen in das Unterwerkzeug einen Leitungsabschnitt-Aufnahmekanal aufweist.

Nach dem Einsetzen des entsprechend rollierten Wärmeübertragungsbleches in die Aufnahme im Unterwerkzeug wird gemäß dem erfindungsgemäßen Verfahren das Rohrleitungssystem in das Unterwerkzeug eingelegt, und dabei insbesondere der geradlinige Leitungsabschnitt in den, bereits in der Aufnahme befindlichen Leitungsabschnitt-Aufnahmekanal eingelegt. Bei eingelegtem Leitungsabschnitt und eingelegtem Leitungsabschnitt-Aufnahmekanal ragt der Rohrquerschnitt des geradlinigen Leitungsabschnittes vorteilhafterweise nicht über die Oberseite der Aufnahme hinaus. Hierdurch kann beim Schließen des Werkzeuges und bei der Verpressung der Trägerplatte mit dem Wärmeübertragungsblech der kreisförmige Rohrquerschnitt der geradlinigen Leitungsabschnitte beibehalten werden.

Aus der EP 1 482 258 A1 geht ein Rohrverdampfer hervor, bei dem zwischen zwei dünnen, wärmeleitenden Folien ein Rohr untergebracht ist. Hier wird bei dem Einpressen des Rohres in eine Kontur einer Negativform zugleich eine Folie tiefgezogen. Aus der Druckschrift geht weder ein Flächenwärmetauscherelement mit einer Trägerplatte hervor, noch ein Rollieren der Wärmeübertragungsbleche zur Erzielung eines Leitungsabschnitt-Aufnahmekanals.

Auch geht aus der Druckschrift nicht hervor, dass in einem Unterwerkzeug ein Unterbringungsraum mit einem Leitungsabschnitt-Aufnahmekanal angeordnet ist, in dem ein darin eingesetzter, geradliniger Leitungsabschnitt mit einem kreisförmigen Querschnitt vollständig unterbringbar ist.

Eine weitere, ähnliche Wärmetauschvorrichtung ist aus der EP 0 806 617 A2 bekannt. Hier ist gleichermaßen weder eine Trägerplatte offenbart, noch ein Rollieren des Wärmeübertragungsbleches, noch ein Unterwerkzeug mit einem entsprechend groß ausgebildeten Unterbringungsraum für einen Leitungsabschnitt-Aufnahmekanal, in den hinein ein geradliniger Leitungsabschnitt mit einem kreisförmigen Querschnitt einsetzbar wäre.

Weitere Vorteile der Erfindung ergeben sich aus den nicht zitierten Unteransprüchen, sowie anhand der nachfolgenden Beschreibung der in den Zeichnungen dargestellten Ausführungsbeispiele. In den Zeichnungen zeigen:
- Fig. 1: in einer schematischen Draufsicht ein erstes Ausführungsbeispiel eines erfindungsgemäßen Flächenwärmetauscherelementes mit drei parallel geschalteten Leitungszweigen,
- Fig. 1a: in einer teilgeschnittenen, schematischen Darstellung etwa entlang Schnittlinie la-la in Fig. 1 einen Verbindungsbereich eines Flächenwärmetauscherelementes zwischen einem geradlinigen Leitungsabschnitt, einem Wärmeübertragungsblech, einer Trägerplatte und einer Glasplatte,
- Fig. 2: in einer Darstellung gemäß Fig. 1 ein weiteres Ausführungsbeispiel mit vier parallel geschalteten Leitungszweigen,
- Fig. 3: in einer Darstellung gemäß Fig. 1 ein weiteres Ausführungsbeispiel mit fünf parallel geschalteten Leitungszweigen,
- Fig. 4: in einer Darstellung gemäß Fig. 1 ein weiteres Ausführungsbeispiel mit sechs parallel geschalteten Leitungszweigen,
- Fig. 5: in einer Darstellung gemäß Fig. 1 ein weiteres Ausführungsbeispiel eines erfindungsgemäßen Flächenwärmetauscherelementes in einer alternativen Ausgestaltung mit drei parallel geschalteten Leitungszweigen,
- Fig. 6: das Ausführungsbeispiel eines Flächenwärmetauscherelementes der Fig. 1 in einer Darstellung gemäß Fig. 1, wobei der Übersichtlichkeit halber die Wärmeübertragungsbleche weggelassen sind,
- Fig. 7: ein aus Oberwerkzeug und Unterwerkzeug bestehendes Werkzeug zur Fertigung eines Flächenwärmetauscherelementes gemäß Fig. 6,
- Fig. 8: in einer schematischen teilgeschnittenen Explosionsdarstellung das Oberwerkzeug, die Trägerplatte, einen geradlinigen Leitungsabschnitt, ein Wärmeübertragungsblech und das Unterwerkzeug, und
- Fig. 9: in einer abgebrochenen, schematischen, teilgeschnittenen Darstellung, vergleichbar der Fig. 1a, das geschlossene Werkzeug und das gefertigte Flächenwärmetauscherelement etwa entlang Schnittlinie IX-IX in Fig. 6.

Gleiche oder miteinander vergleichbare Teile oder Elemente sind in der nachfolgenden Figurenbeschreibung der Übersichtlichkeit halber mit gleichen Bezugszeichen, teilweise unter Hinzufügung kleiner Buchstaben, bezeichnet, auch soweit unterschiedliche Ausführungsbeispiele betroffen sind.

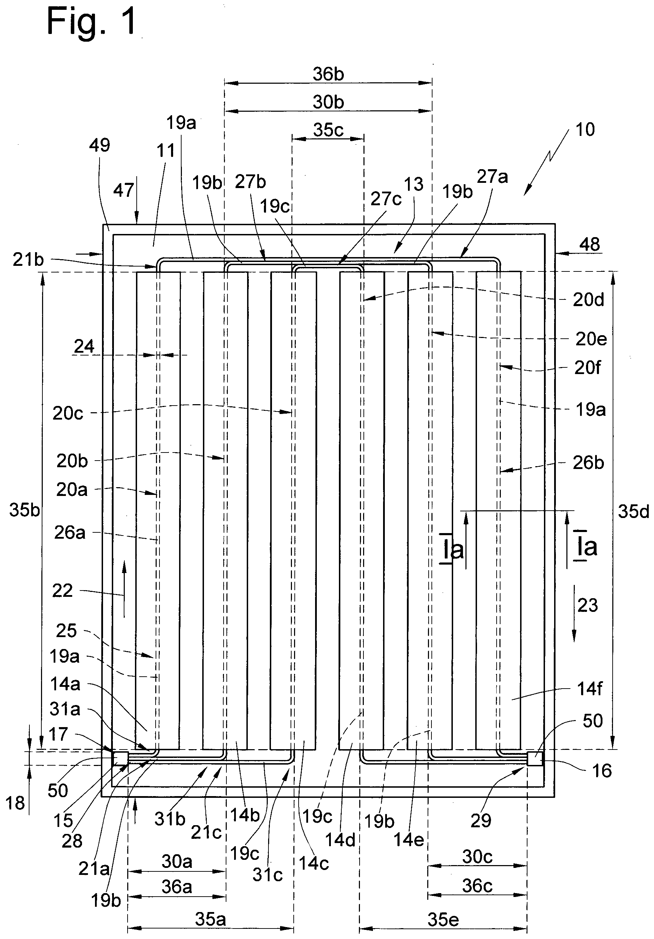

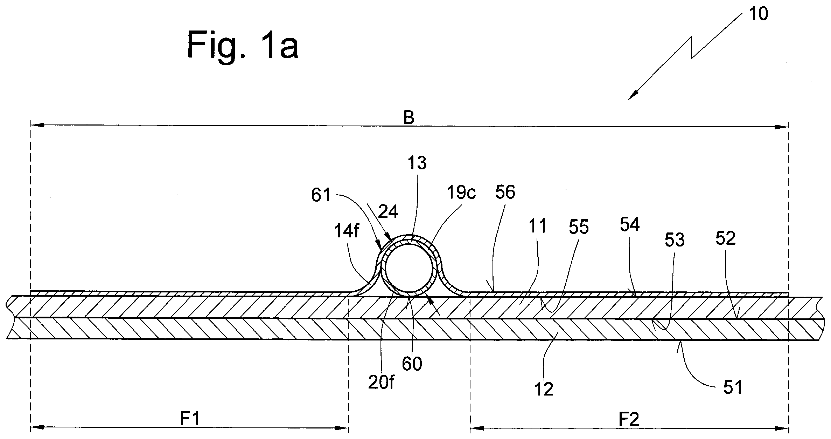

Das erfindungsgemäße Flächenwärmetauscherelement ist anhand des Ausführungsbeispiels der Fig. 1 in seiner Gesamtheit mit 10 bezeichnet und soll - nachfolgend zunächst unter Bezugnahme auf die Fig. 1 und die Fig. 1a - beschreiben werden.

Das Flächenwärmetauscherelement 10 besitzt im Wesentlichen rechteckige Ausmaße, und weist eine Länge 47 und eine Breite 48 auf. Ein umlaufender Rahmen 49 kann, wie bei dem Ausführungsbeispiel der Fig. 1 gezeigt, vorgesehen sein, insbesondere wenn das Flächenwärmetauscherelement 10 als vorkonfektioniertes Paneel 38 einer in einem Gebäuderaum montierbaren Kühl- und Heizungsdecke ausgebildet ist. Der Rahmen 49 kann insoweit dazu genutzt werden, das Element insgesamt kassettenartig auszubilden, was an sich bekannt ist.

Für den Fall, dass das Flächenwärmetauscherelement als Absorber 37 eines Sonnenkollektors ausgebildet ist, kann der Rahmen 49 auch von einem von einem Fensterelement her bekannten Rahmen gebildet sein oder einem solchen angenähert sein.

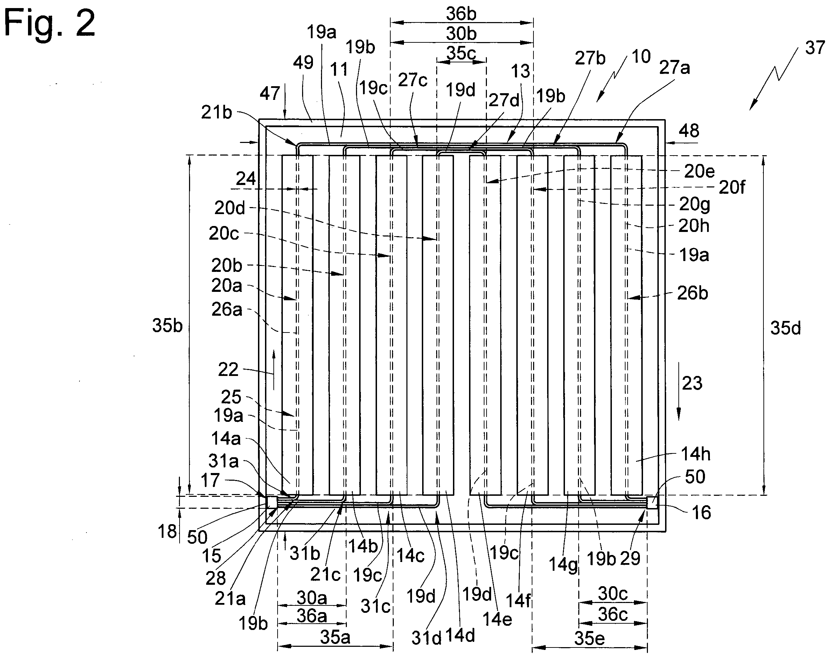

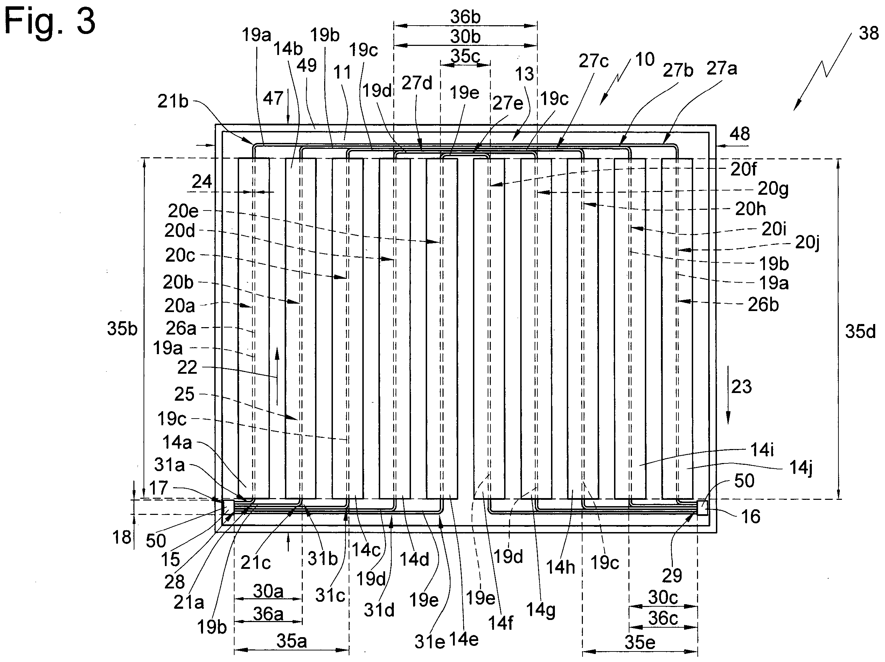

Lediglich beispielhaft ist das Ausführungsbeispiel der Fig. 2 als Absorber 37 und das ähnlich konfigurierte Ausführungsbeispiel der Fig. 3 als Paneel 38 bezeichnet. Dem Fachmann ist auch deutlich, dass sämtliche der dargestellten Ausführungsbeispiele sowohl entweder als Absorber 37 oder als Paneel 38 ausgebildet sein können.

Das Flächenwärmetauscherelement 10 umfasst, wie am besten aus der Schnittdarstellung der Fig. 1a ersichtlich, eine Trägerplatte 11. Diese ist bei dem Ausführungsbeispiel aus Metall gebildet.

Die Oberseite 53 der Trägerplatte ist in der Regel, wenn das Flächenwärmetauscherelement 10 als Absorber ausgebildet ist, schwarz lackiert.

Die Oberseite 53 der Trägerplatte 11 wird bei dem Ausführungsbeispiel der Figuren 1 und 1a von einer Glasplatte 12 vollflächig überdeckt, was dem Umstand geschuldet ist, dass dieses Flächenwärmetauscherelement als Absorber 37 ausgebildet ist. Für den Fall, dass das Flächenwärmetauscherelement als Paneel einer Kühl- oder Heizungsdecke ausgebildet ist, ist diese Glasplatte 12 nicht erforderlich.

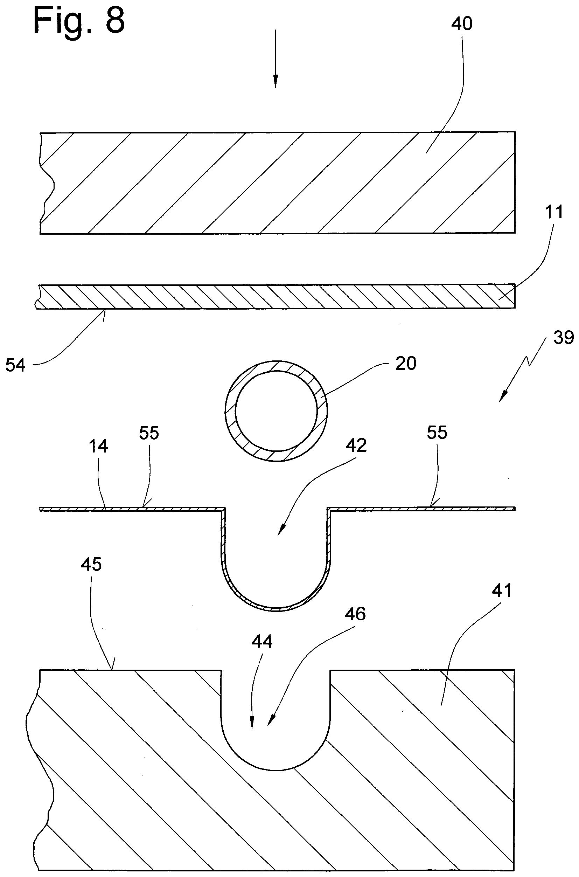

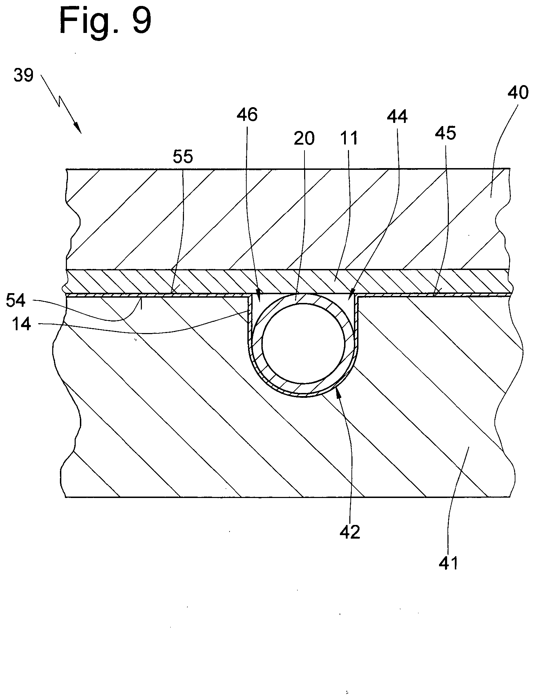

Die Begriffe Ober- und Unterseite beziehen sich auf die geometrische Situation der Figuren 8 und 9, die das Werkzeug 39 verdeutlichen. Aus Gründen der Übersicht ist die Bezeichnung Ober- und Unterseite aber analog auch in Fig. 1a in Anpassung an Fig. 8 und 9 gewählt worden, obwohl dort die Oberseite 53 der Trägerplatte 11, bezogen auf Fig. 1a, nach unten zeigt.

Das erfindungsgemäße Flächenwärmetauscherelement 10 umfasst ein Rohrleitungssystem 13, das unter Zuhilfenahme von Wärmeübertragungsblechen 14 an einer Trägerplatte 11 befestigt ist.

Das Rohrleitungssystem 13 weist einen zentralen Eingangsanschluss 15 auf, und einen zentralen Ausgangsanschluss 16.

Der Eingangsanschluss 15 weist, was in Fig. 1 lediglich schematisch zu erkennen ist, einen Anschluss-Rohrabschnitt 17 auf. Dieser ist von einem Abschnitt eines beispielsweise aus Kupfer bestehenden Rohres gebildet, mit einem Rohrquerschnitt, der als Anschlussquerschnitt bezeichenbar ist. Der Anschlussrohrabschnitt 17 dient der kommunikativen Verbindung des in Fig. 1 mit 10 bezeichneten Flächenwärmetauscherelementes mit weiteren, nicht dargestellten, im Montagezustand benachbart angeordneten Flächenwärmetauscherelementen, um diese in Reihe zu schalten, so dass das Strömungsfluid, also vorzugsweise Wasser, mehrere benachbart angeordnete Flächenwärmetauscherelemente sukzessive durchströmen kann.

Das Rohrleitungssystem 13 des Flächenwärmetauscherelementes 10 der Fig. 1 weist drei parallel geschaltete Leitungszweige 19a, 19b, 19c auf.

Jeder Leitungszweig 19a, 19b, 19c weist einen ersten geradlinigen Leitungsabschnitt und einen zweiten geradlinigen Leitungsabschnitt auf.

Der in Fig. 1 mit 19a bezeichnete erste Leitungszweig weist einen ersten geradlinigen Leitungsabschnitt 20a auf, sowie einen zweiten geradlinigen Leitungsabschnitt 20f. Die beiden Leitungsabschnitte 20a und 20f sind durch einen quer verlaufenden geradlinigen Leitungsabschnitt 27a miteinander verbunden.

Das durch den Eingangsanschluss 15 in das Rohrleitungssystem 13 hinein eintretende Strömungsfluid wird zunächst an der Verzweigungsstelle 28 auf drei Leitungszweige 19a, 19b und 19c aufgeteilt. Durch alle drei Leitungszweige strömt daher, da diese vorzugsweise den gleichen Querschnitt besitzen, das gleiche Volumen an Fluid pro Zeit. Die Volumenströme durch die Leitungszweige 19a, 19b, 19c sind daher gleich oder im Wesentlichen gleich.

Das durch den Leitungszweig 19a hindurch strömende Fluid trifft zunächst auf einen ersten gekrümmten Leitungsabschnitt 21a, sodann auf einen ersten geradlinigen Leitungsabschnitt 20a, schließlich auf den quer verlaufenden geradlinigen Leitungsabschnitt 27a, durchströmt weiter den zweiten geradlinigen Leitungsabschnitt 20f, gelangt an einen weiteren gekrümmten Leitungsabschnitt, und fließt im Bereich der Zusammenflussstelle 29 mit den beiden anderen Leitungszweigen 19b und 19c wieder zusammen, und kann schließlich aus dem Ausgangsanschluss 16 aus dem Rohrleitungssystem 13 dieses Flächenwärmetauscherelementes 10 austreten.

Insgesamt ist, wie die soeben durchgeführte Beschreibung des Verlaufs des Leitungszweiges 19a zeigt, das Strömungsfluid entlang einer im Wesentlichen U-förmigen Bahn entlang der Trägerplatte 11 geführt worden.

Auch das durch den zweiten Leitungszweig 19b hindurchströmende Fluid wird entlang einer im Wesentlichen U-förmigen Strömungsbahn oder Bewegungsbahn entlang der Trägerplatte 11 geführt.

Hier ist allerdings die Verbindung der beiden geradlinigen Abschnitte 20b und 20e miteinander durch einen Querschenkel 27b bewirkt, der kürzer ist als der Querschenkel 27a.

Dafür sind bei diesem Leitungszweig 19b die Abstände zwischen der Verzweigungsstelle 28 und dem entsprechenden gekrümmten Leitungsabschnitt 21c größer als der Abstand zwischen Verzweigungsstelle 28 und gekrümmten Leitungsabschnitt 21a bei dem ersten Leitungszweig 19a.

Gleiches gilt für den dritten Leitungszweig 19c, wobei hier der Querschenkel 27c des U noch kürzer gehalten ist.

Durch die Parallelschaltung der drei Leitungszweige 19a, 19b, 19c und das Entlangführen des Strömungsfluides jeweils entlang im Wesentlichen U-förmiger Bahnen entlang der Trägerplatte 11 wird ein homogener, gleichmäßiger Wärmetausch im Wesentlichen entlang der gesamten Trägerplatte 11 ermöglicht.

Eine wesentliche Besonderheit des erfindungsgemäßen Flächenwärmetauscherelementes 10 besteht darin, dass die Rohrquerschnitte der drei Leitungszweige 19a, 19b, 19c, insbesondere die Querschnitte der geradlinigen Leitungsabschnitte 20a, 20b, 20c, 20d, 20e, 20f nur zwischen 6 mm und 9 mm betragen, und damit kleiner, insbesondere erheblich kleiner sind, als bei Flächenwärmetauscherelementen des Standes der Technik.

Insbesondere sind die Rohrquerschnitte der Leitungszweige geringer als der Rohrquerschnitt des Anschlussrohres 17.

Dies ermöglicht eine Aufsplittung oder Aufteilung des Volumenstroms des Strömungsfluides durch dieses Flächenwärmetauscherelement 10 der Fig. 1 hindurch durch auf mehrere Leitungszweige mit kleineren Leitungsquerschnitten, und zugleich eine Verbindung dieses, in Fig. 1 dargestellten Flächenwärmetauscherelementes 10 mit anderen, benachbarten, nicht dargestellten Flächenwärmetauscherelementen unter einer Benutzung herkömmlicher Verbindungsmittel und herkömmlicher Werkzeuge auf Grund des großen, herkömmlichen Anschlussquerschnittes.

Hierdurch kann bei reduziertem Materialeinsatz die Wärmetauschleistung optimiert werden.

Eine weitere, wesentliche Besonderheit des erfindungsgemäßen Flächenwärmetauscherelementes besteht darin, dass die Weglängen der einzelnen Leitungszweige 19a, 19b, 19c gleich lang sind, oder im Wesentlichen gleich lang sind.

So zeigt eine Addition der Weglängenabschnitte 35a, 35b, 35c, 35d und 35e des dritten Leitungszweiges 19c die gleiche Gesamtweglänge, wie eine Addition der Weglängenabschnitte 36a, 36b und 36c, zuzüglich der gleichen Weglängenabschnitte 35b und 35d.

Die Weglängen der unterschiedlichen Leitungszweige sind also bei niedrigen Rohrquerschnitten zwischen 6 mm und 9 mm gleich.

Bei dem Ausführungsbeispiel der Fig. 1 ist des Weiteren deutlich, dass die Leitungszweige 19a, 19b, 19c in einem Bereich stromabwärts der Verzweigungsstelle 28 zunächst in einem Parallel-Führungsbereich 30a parallel zueinander geführt sind. An unterschiedlichen Abbiegestellen 31a, 31b, 31c knicken die geradlinigen Leitungsabschnitte 20a, 20b, 20c von dem Parallel-Führungsbereich 30a ab.

Das Ausführungsbeispiel der Fig. 1 zeigt darüber hinaus einen weiteren Parallel-Führungsbereich 30b, in dem die drei Leitungszweige 19a, 19b, 19c wiederum parallel geführt werden.

Schließlich ist ein dritter Parallel-Führungsbereich 30c im Bereich des unteren rechten Randes der Fig. 1 vorgesehen.

Das Vorsehen derartiger Parallel-Führungsbereiche 30a, 30b, 30c ermöglicht eine besonders einfache Herstellung eines Rohrleitungssystems 13 eines erfindungsgemäßen Flächenwärmetauscherelementes 10, sowie eine besonders einfache Herstellung und Handhabung des Rohrleitungssystems 13 und des Flächenwärmetauscherelementes 10. So können nämlich die unterschiedlichen Rohre zur Fertigung der unterschiedlichen Leitungszweige 19a, 19b, 19c zunächst gesondert abgelängt, gebogen, und sodann gemeinsam in einem Sammelstutzen, der den Eingangsanschluss 15 oder den Ausgangsanschluss 16 darstellt, befestigt werden.

Im Übrigen wird in diesem Zusammenhang darauf hingewiesen, dass der Eingangsanschluss 15 und/oder der Ausgangsanschluss 16 einen Sammelstutzen aufweisen kann, wie er in der nachveröffentlichten deutschen Patentanmeldung DE 10 2012 014 825 A1 der Anmelderin, deren Inhalt hiermit auch zum Zwecke der Bezugnahme auf einzelne Merkmale, in den Inhalt der vorliegenden Patentanmeldung eingeschlossen wird, beschrieben ist.

Es wird zu beachten gegeben, dass im Rahmen der vorliegenden Patentanmeldung unter dem Führen des Strömungsfluides entlang einer im Wesentlichen U-förmigen Bewegungsbahn entlang der Trägerplatte 11 die Bewegung des Strömungsfluides in einer groben Näherung gemeint ist, wobei eine Führung des Strömungsfluides entlang der Parallel-Führungsbereiche 30a und 30c unberücksichtigt bleibt.

Wie das Ausführungsbeispiel der Fig. 1 in diesem Zusammenhang deutlich macht, sind die unterschiedlichen Leitungszweige 19a, 19b, 19c sämtlich entlang einer im Wesentlichen U-förmigen Bewegungsbahn geführt. Auch bei dieser Angabe bleiben die jeweiligen Abschnitte der Leitungszweige 19a, 19b, 19c, die den Parallel-Führungsbereichen 30a und 30c zugeordnet sind, unberücksichtigt.

Die einzelnen Leitungszweige 19a, 19b, 19c weisen gleich lange U-Längsschenkel 20a, 20b, 20c, 20d, 20e, 20f, aber unterschiedlich lange U-Querschenkel 27a, 27b, 27c auf.

Ausweislich Fig. 1a soll nun noch erörtert werden, dass jedem geradlinigen Leitungsabschnitt 20a, 20b, 20c, 20d, 20e, 20f ein Wärmeleitblech 14a, 14b, 14c, 14d, 14e, 14f zugeordnet ist. Das Wärmeleitblech 14, das auch als Wärmeleitfolie bezeichenbar ist, weist eine sehr dünne Wandstärke und eine Breite B (Fig. 1a) auf.

Etwa im Bereich der mit F₁ und F₂ bezeichneten Bereiche ist die Oberseite 55 des Wärmeleitbleches 14f mit einer Klebstoffschicht versehen. Unter Zuhilfenahme dieser Klebstoffschicht kann das Wärmeleitblech 14f auf der Unterseite 54 der Trägerplatte 11 festgeklebt werden, und auf diese Weise den geraden Leitungsabschnitt 20f an der Trägerplatte 11 befestigen, und zudem für einen unmittelbaren thermischen Kontakt zwischen der Oberseite 60 des geradlinigen Leitungsabschnittes 20f mit der Trägerplatte 11 sorgen.

Mit einem Umgreifungsabschnitt 61 umgreift das Wärmeleitblech 14 den geraden Leitungsabschnitt 20f rückseitig.

Der geradlinige Leitungsabschnitt 20f mit einem Rohrquerschnitt 24 zwischen 6 mm und 9 mm befindet sich auf diese Weise in einem hervorragenden thermischen Kontakt mit der Trägerplatte 11, ohne, dass es einer Abflachung des Leitungsquerschnittes hin zu einem im Wesentlichen D-förmigen Querschnitt bedarf.

Der im Querschnitt kreisförmige Leitungsabschnitt 20f ist zwischen Wärmeleitblech 14f und Trägerplatte 11 angeordnet.

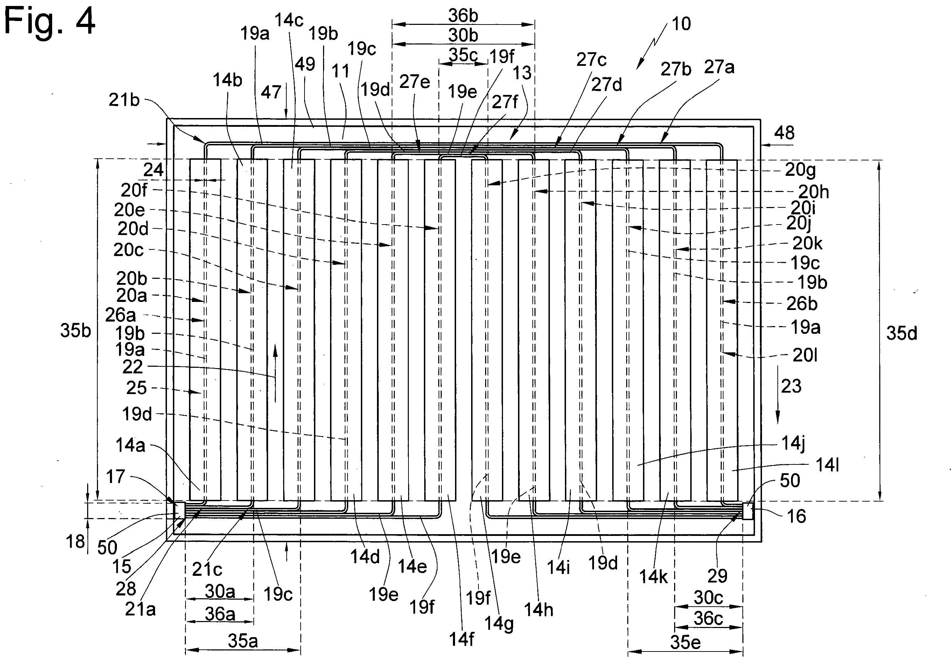

Die Figuren 2 bis 4 zeigen weitere Ausführungsbeispiele eines erfindungsgemäßen Flächenwärmetauscherelementes 10, mit unterschiedlichen Breiten 48 und Längen 47. Die Zahl der parallelen Leitungszweige 19 beträgt bei dem Ausführungsbeispiel der Fig. 2 vier, bei dem Ausführungsbeispiel der Fig. 3 fünf, und bei dem Ausführungsbeispiel der Fig. 4 sechs.

Die unterschiedlichen Ausführungsbeispiele verdeutlichen, dass die Zahl der parallelen Leitungszweige 19 an sich beliebig gewählt werden kann.

Bei vorteilhaften Ausgestaltungen der Erfindung liegt die Zahl paralleler Leitungszweige pro Flächenwärmetauscherelement aber immer zwischen zwei und sechs.

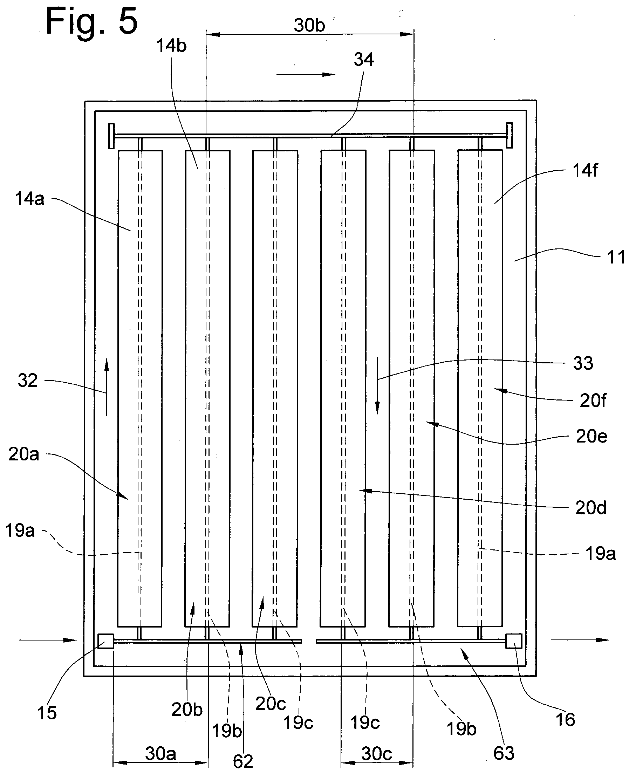

Fig. 5 zeigt ein weiteres Ausführungsbeispiel eines erfindungsgemäßen Flächenwärmetauscherelementes 10, bei dem wiederum drei parallel geschaltete Leitungszweige 19a, 19b, 19c vorgesehen sind.

Hier sind die geradlinig verlaufenden Leitungsabschnitte 20a, 20b, 20c, 20d, 20e, 20f allerdings nicht über Umbiegestellen 31 oder gekrümmte Leitungsabschnitte 21, wie bei dem Ausführungsbeispiel der Fig. 1 angebunden, sondern stehen rechtwinkelig von zentralen Rohrabschnitten 62, 63, 34 ab.

Ausweislich Fig. 5 ist der Eingangsanschluss 15 mit einem ersten Rohrabschnitt 62 verbunden, von dem rechtwinklig die geradlinigen Leitungsabschnitte 20a, 20b, 20c abgehen. Der erste Rohrabschnitt 62 stellt eine erste Sammelleitung dar, die einen Rohrquerschnitt aufweist, der größer ist als die Rohrquerschnitte der geradlinigen Abschnitte 20a, 20b, 20c.

Die geradlinigen Leitungsabschnitte 20a, 20b, 20c sind an den Rohrabschnitt 62 angehalst, und dort beispielsweise festgelötet.

Die geradlinigen Leitungsabschnitte 20a, 20b, 20c treffen mit ihren anderen Enden, also den bezüglich Fig. 5 oberen Endbereichen, auf eine zentrale Sammelleitung 34, von der wiederum die drei geradlinigen Leitungsabschnitte 20d, 20e und 20f abgehen. Diese sind im unteren Bereich der Fig. 5 mit einer weiteren, als zweiter Rohrabschnitt 63 bezeichneten Sammelleitung verbunden.

Auch bei diesem Ausführungsbeispiel der Fig. 5 sind drei parallel geschaltete Leitungszweige 19a, 19b, 19c vorgesehen, hier allerdings mit der Besonderheit, dass die Leitungszweige im Bereich der zentralen Sammelleitung 34 zusammenfließen, und sich danach wieder trennen. Auch hier wird das Strömungsfluid entlang einer im Wesentlichen U-förmigen Bahn entlang jedes Leitungszweiges 19a, 19b, 19c geführt.

Sämtliche geradlinigen Abschnitte 20a, 20b, 20c, 20d, 20e, 20f sind wiederum von einem Wärmeleitblech 14a, 14b, 14c, 14d, 14e, 14f übergriffen und unter Zuhilfenahme des Wärmeleitbleches an der Trägerplatte 11 festgelegt. Insbesondere weisen auch bei diesem Ausführungsbeispiel die Rohrquerschnitte der geradlinigen Leitungsabschnitte 20a, 20b, 20c, 20d, 20e, 20f einen Rohrquerschnitt zwischen 6 mm und 9 mm auf, vorteilhafterweise mit einem im Wesentlichen kreisförmigen Querschnitt. Auch dieses Ausführungsbeispiel der Fig. 5 kann als Absorber 37 oder alternativ als Paneel 38 ausgebildet sein.

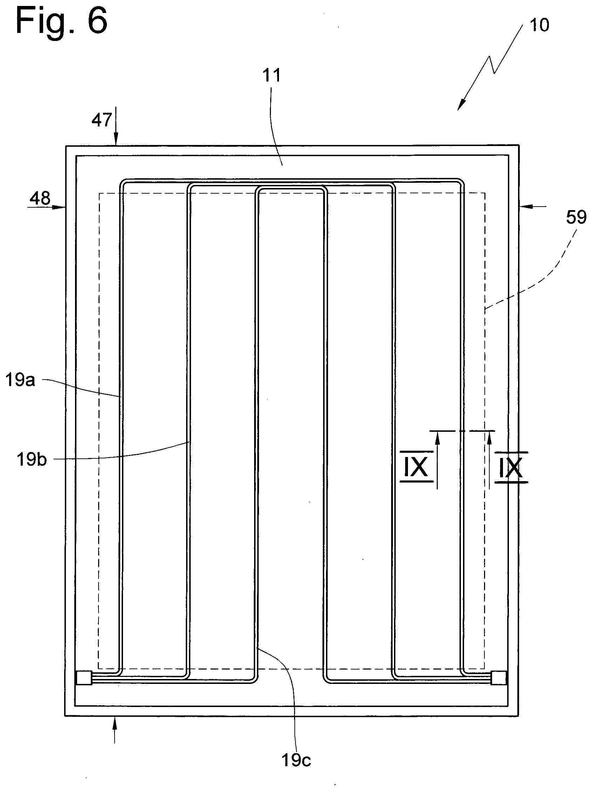

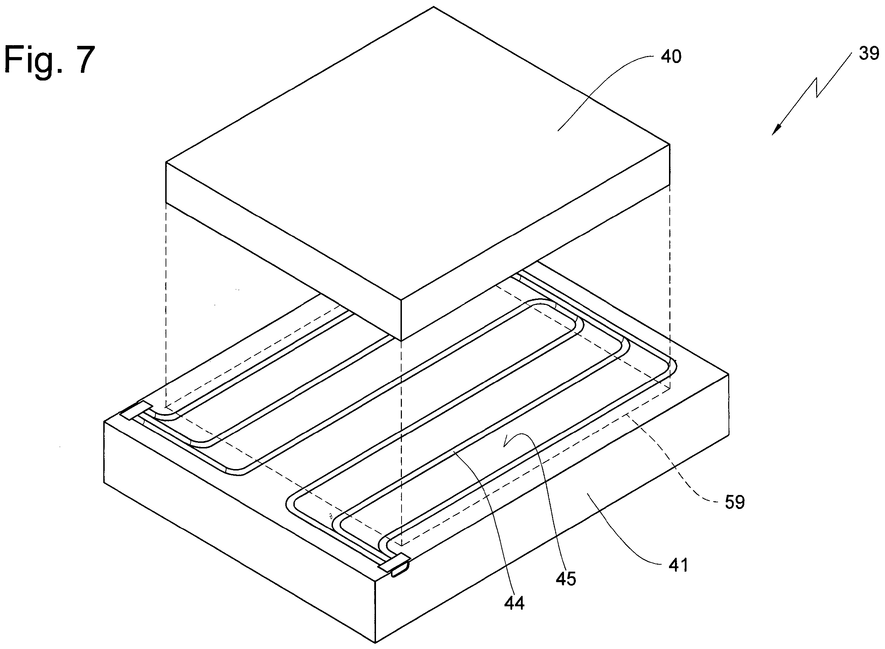

Fig. 6 zeigt zur Veranschaulichung der Herstellung eines Flächenwärmetauscherelementes 10 zunächst das Ausführungsbeispiel der Fig. 1, wobei die Wärmeleitbleche 14 der Einfachheit halber weggelassen sind. Man erkennt in gestrichelter Kontur 59 eine Kontur eines Oberwerkzeuges 40, das nachfolgend anhand Fig. 7 erläutert werden soll:

Fig. 7 zeigt das aus Oberwerkzeug 40 und Unterwerkzeug 41 bestehende Werkzeug 39 in einer sehr schematischen Darstellung. Das Oberwerkzeug 40 ist relativ zu dem festgehaltenen Unterwerkzeug 41 verlagerbar. Fig. 7 zeigt das Werkzeug 39 in geöffnetem Zustand, in dem das Oberwerkzeug 40 von dem Unterwerkzeug 41 beabstandet ist. Fig. 9 zeigt demgegenüber das geschlossene Werkzeug 39, bei dem das Oberwerkzeug 40 in Folge eines Senk-, bzw. Pressvorganges an das Unterwerkzeug 41 weitest möglich herangebracht ist.

Das Werkzeug 39 ist insgesamt auch als Presse bezeichenbar.

Das Unterwerkzeug 41 weist eine Oberseite 45 auf, in der eine Vielzahl von Aufnahmen 44 untergebracht ist.

Fig. 7 zeigt, dass in der Oberseite 45 des Unterwerkzeuges 41 eine Aufnahmekontur mit einer Vielzahl geradliniger Aufnahmen 44 untergebracht ist, die dem Verlauf der Leitungszweige bei dem zu fertigenden Flächenwärmetauscherelement 10 entspricht.

Fig. 7 lässt des Weiteren erkennen, dass die Kontur des Oberwerkzeuges 39 nur diejenigen flächigen Bereiche der Oberseite 45 des Unterwerkzeuges 41 abdeckt oder überstreicht, in denen geradlinig ausgebildete Leitungsabschnitte 20a, 20b, 20c anzuordnen sind.

Fig. 8 soll das Herstellungsverfahren eines erfindungsgemäßen Flächenwärmetauscherelementes 10 verdeutlichen:

Fig. 8 zeigt ein Wärmeleitblech 14, welches rolliert ist. Der Rolliervorgang bezeichnet einen Umformschritt, bei dem aus einem planen Wärmeleitblech 14 durch Umformung ein Kanal 42, der sogenannte Leitungsabschnitt-Aufnahmekanal, gefertigt wird.

Das so umgeformte und in Fig. 8 im Profil schematisch dargestellte Wärmeleitblech 14 wird an den vorgegebenen Stellen auf das Unterwerkzeug 41 aufgesetzt. Dabei wird das Wärmeleitblech 14 derartig positioniert, dass der Leitungsabschnitt-Aufnahmekanal 42 in den Unterbringungsraum 46 der Aufnahme 44 eingesetzt wird. Diesen Zustand zeigt Fig. 9.

Fig. 8 verdeutlicht des Weiteren, dass der geradlinige Leitungsabschnitt 20 des Rohrleitungssystems 13 sodann in den Leitungsabschnitt-Aufnahmekanal 42 eingesetzt wird. Auch diese Situation zeigt Fig. 9.

Die Reihenfolge ist dabei wie folgt:
Zunächst wird das Wärmeleitblech 14 in die Aufnahme 44 eingesetzt.

Sodann wird der Leitungsabschnitt 20 in den Kanal 42 eingesetzt.

Die Wärmeleitbleche 14 werden sukzessive an den durch die Aufnahme 44 vorgegebenen Positionen auf dem Unterwerkzeug 41 aufgelegt, bzw. eingesetzt. Sodann wird das Rohrleitungssystem 13 insgesamt auf das Unterwerkzeug 41 aufgesetzt.

Schließlich wird eine Trägerplatte 11 auf das Unterwerkzeug 41, d. h. Wärmeleitblech 14 und das Rohrleitungssystem 13 überdeckend, aufgesetzt.

Sodann wird das Werkzeug 39 geschlossen und das Oberwerkzeug 40 zum Zwecke eines Pressvorganges auf das Unterwerkzeug 41 aufgepresst. In Folge des Pressvorganges geraten die Kontaktflächen von Trägerplatte 11 und Wärmeübertragungsblech 14 miteinander in Kontakt. Die mit Klebstoff beschichteten Abschnitte der Oberseite 55 des Wärmeleitbleches 14 geraten mit der Unterseite 54 der Trägerplatte 11 für einen vorgegebenen Zeitraum unter einem vorgegebenen Druck in Kontakt, und sorgen so für einen dauerhaften festen Kontakt zwischen Trägerplatte 11 und Wärmeleitblech 14. Damit ist die Fertigung des Flächenwärmetauscherelementes 10 abgeschlossen.

Die Figuren 8 und 9 lassen des Weiteren erkennen, dass der Unterbringungsraum 46 in dem Unterwerkzeug 41 so dimensioniert ist, dass er hinsichtlich seiner Breite und Länge auf die Dimension des Leitungsabschnitt-Aufnahmekanals 42 abgestimmt ist, und dieser wiederum so dimensioniert ist, dass darin der Rohrquerschnitt des geradlinigen Leitungsabschnitt 20 vollständig aufgenommen werden kann. Bei eingesetztem Leitungsabschnitt 20 ragt der Leitungsabschnitt 20 über die Oberseite 45 des Unterwerkzeugs 41 nicht hinaus oder im Wesentlichen nicht hinaus, und wird insbesondere bei dem Pressvorgang nicht verformt.

Angemerkt sei, dass bei weiteren Ausführungsbeispielen der Erfindung auch gekrümmte Abschnitte des Rohrleitungssystems 13, sowie auch Parallel-Führungsbereiche 30a, 30b, 30c, 62, 63, 34 oder andere Abschnitte des Rohrleitungssystems zur Erzielung eines weiter verbesserten thermischen Kontaktes mit weiteren, in den Zeichnungen nicht dargestellten Wärmeleitblechen 14 stehen können. Insbesondere wird darauf hingewiesen, dass Wärmeübertragungsstreifen, wie sie in der deutschen nachveröffentlichten Patentanmeldung DE 10 2012 025 073 A1 der Anmelderin beschrieben sind, bei Ausführungsbeispielen der vorliegenden Erfindung vorgesehen sein können. Zu diesem Zwecke, auch zum Zwecke der Bezugnahme auf einzelne Merkmale, wird der Inhalt der zuletzt genannten deutschen Patentanmeldung hiermit in den Inhalt der vorliegenden Patentanmeldung mit eingeschlossen.

Gemäß einer vorteilhaften Ausgestaltung der Erfindung befinden sich sämtliche Elemente des Flächenwärmetauscherelementes, insbesondere auch der Eingangsanschluss 15 und der Ausgangsanschluss 16, innerhalb der Kontur der Trägerplatte 11.

## Patentansprüche

1. Flächenwärmetauscherelement (10), umfassend eine Trägerplatte (11), an der ein Rohrleitungssystem (13) unter Zuhilfenahme von Wärmeübertragungsblechen (14a, 14b, 14c, 14d, 14e, 14f, 14g, 14h, 14i, 14j, 14k, 14l) festgelegt ist, welches einen Eingangsanschluss (15) und einen Ausgangsanschluss (16) aufweist, wobei der Eingangsanschluss und der Ausgangsanschluss, insbesondere zur Verbindung mit weiteren Flächenwärmetauscherelementen, jeweils einen Anschlussrohrabschnitt (17) mit einem Anschlussquerschnitt (18) aufweisen, wobei
das Rohrleitungssystem im Leitungsweg zwischen Eingangsanschluss und Ausgangsanschluss wenigstens zwei parallel geschaltete Leitungszweige (19a, 19b, 19c, 19d, 19e, 19f) mit jeweils wenigstens einem geradlinig ausgebildeten Leitungsabschnitt (20a, 20b, 20c, 20d, 20e, 20f, 20g, 20h, 20i, 20j, 20k, 20l) aufweist, wobei die geradlinigen Leitungsabschnitte einander unmittelbar benachbart angeordnet sind, und parallel entlang einer gemeinsamen Strömungsrichtung (22) durchströmt werden, und
**dadurch gekennzeichnet, dass** die Leitungsabschnitte einen gleichen Rohrquerschnitt (24) aufweisen, der kleiner ist als der Anschlussquerschnitt.

2. Flächenwärmetauscherelement nach Anspruch 1, **dadurch gekennzeichnet, dass** die Leitungsabschnitte und/oder die Leitungszweige einen Rohrquerschnitt zwischen 6 mm und 9 mm aufweisen.

3. Flächenwärmetauscherelement nach einem der vorangegangenen Ansprüche, **dadurch gekennzeichnet, dass** mehrere Leitungszweige (19a, 19b, 19c, 19d, 19e) parallel geschaltet und gleichmäßig verteilt entlang der Trägerplatte (11) angeordnet sind.

4. Flächenwärmetauscherelement nach einem der vorangegangenen Ansprüche, **dadurch gekennzeichnet, dass** die parallel geschalteten Leitungszweige (19a, 19b, 19c, 19d, 19e) entlang der Trägerplatte eine im wesentlichen U-förmige Bahn beschreiben.

5. Flächenwärmetauscherelement nach Anspruch 4, **dadurch gekennzeichnet, dass** die einzelnen Leitungszweige unterschiedliche U-Schenkel-Längen (U-Längsschenkellängen 26a, 26b und U-Querschenkellängen 27) aufweisen.

6. Flächenwärmetauscherelement nach Anspruch 1, **dadurch gekennzeichnet, dass** wenigstens eine Verzweigungsstelle (28) vorgesehen ist, an der eine Verzweigung des Eingangsanschlusses (15) auf mehrere Leitungszweige (19a, 19b, 19c, 19d, 19e, 19f) erfolgt.

7. Flächenwärmetauscherelement nach Anspruch 6, **dadurch gekennzeichnet, dass** die Verzweigungsstelle (28) an dem Eingangsanschluss (15) angeordnet ist.

8. Flächenwärmetauscherelement nach Anspruch 6 oder 7, **dadurch gekennzeichnet, dass** die mehreren Leitungszweige (19a, 19b, 19c, 19d, 19e) entlang einem Parallelführungsbereich (30a) stromabwärts der Verzweigungsstelle (28) parallel zueinander verlaufen, und an unterschiedlichen, voneinander beabstandeten Abbiegestellen (31a, 31b) den Parallelführungsbereich (30) verlassen.

9. Flächenwärmetauscherelement nach einem der vorangegangenen Ansprüche, **dadurch gekennzeichnet, dass** zwei Stränge von geradlinig verlaufenden Leitungsabschnitten (20a, 20b, 20c, 20d, 20e, 20f) vorgesehen sind, wobei ein erster Strang in einer ersten Richtung (32) und der zweite Strang in Gegenrichtung (33) durchströmbar ist, wobei die beiden Stränge miteinander durch eine zentrale, gemeinsam durchströmte Sammelleitung (34) verbunden sind.

10. Flächenwärmetauscherelement nach einem der vorangegangenen Ansprüche, **dadurch gekennzeichnet, dass** die parallelen Leitungszweige (19a, 19b, 19c) zwischen einem Eingangsanschluss (15) und einem Ausgangsanschluss (16) die gleiche Weglänge (35) aufweisen.

11. Verfahren zur Herstellung eines Flächenwärmetauscherelementes (10) nach einem der vorangegangenen Ansprüche, umfassend folgende Schritte:
a) Bereitstellen einer Trägerplatte (11),
b) Bereitstellen eines Rohrleitungssystems (13), welches mehrere parallel geschaltete Leitungszweige (19a, 19b, 19c, 19d, 19e, 19f) und parallel zueinander angeordnete gradlinige Leitungsabschnitte (20a, 20b, 20c, 20d, 20e) aufweist, die einen kreisförmigen Rohrquerschnitt (24) mit einem Aussendurchmesser zwischen 6 mm und 9 mm aufweisen,
c) Bereitstellen einer Mehrzahl von Wärmeübertragungsblechen (14) entsprechend der Zahl der gradlinigen Leitungsabschnitte (20),
d) Bereitstellen eines aus Oberwerkzeug (40) und Unterwerkzeug (41) gebildeten Werkzeuges (39),
e) Rollieren der Wärmeübertragungsbleche (14) zur Erzielung jeweils eines Leitungsabschnitt-Aufnahmekanals (42),
f) Einlegen des jeweiligen, mit Klebstoff versehenen Wärmeübertragungsbleches (14) in das Unterwerkzeug (41), das eine Aufnahme (44) für den Leitungsabschnitt-Aufnahmekanal (42) aufweist,
g) Auflegen des Rohrleitungssystems (13) auf das Unterwerkzeug (41) und Einlegen der gradlinigen Leitungsabschnitte (20) in den jeweiligen Leitungsabschnitt-Aufnahmekanal (42), wobei der jeweilige eingelegte gradlinige Leitungsabschnitt (20) im Wesentlichen bündig zu einer Oberseite (45) des Unterwerkzeuges (41) ausgerichtet ist,
h) Schließen des Werkzeugs (39) unter Verpressung der Trägerplatte (11) gegen die mit Klebstoff versehenen Wärmeübertragungsbleche (14), wobei der Rohrquerschnitt (24) der gradlinigen Leitungsabschnitte (20) keine oder im Wesentlichen keine Änderung erfährt.

## Claims

1. Surface heat exchanger element (10), comprising a support plate (11), on which a pipework system (13) is fixed with the aid of heat transfer plates (14a, 14b, 14c, 14d, 14e, 14f, 14g, 14h, 14i, 14j, 14k, 14l), which has an inlet connection (15) and an outlet connection (16), wherein the inlet connection and the outlet connection, in particular for connection to further surface heat exchanger elements, each have a connection pipe section (17) with a connection cross-section (18), wherein the pipework system has at least two pipe branches (19a, 19b, 19c, 19d, 19e, 19f) connected in parallel in the pipe path between the inlet connection and the outlet connection, each having at least one rectilinear pipe section (20a, 20b, 20c, 20d, 20e, 20f, 20g, 20h, 20i, 20j, 20k, 20l), wherein the rectilinear pipe sections are arranged directly adjacent to one another and are flowed through in parallel along a common flow direction (22), and **characterised in that** the pipe sections have the same pipe crosssection (24), which is smaller than the connection cross-section.

2. Surface heat exchanger element according to claim 1, **characterised in that** the pipe sections and/or the pipe branches have a pipe cross-section of between 6 mm and 9 mm.

3. Surface heat exchanger element according to one of the preceding claims, **characterised in that** several pipe branches (19a, 19b, 19c, 19d, 19e) are connected in parallel and are evenly distributed along the support plate (11).

4. Surface heat exchanger element according to one of the preceding claims, **characterised in that** the pipe branches (19a, 19b, 19c, 19d, 19e) connected in parallel describe a substantially U-shaped path along the support plate.

5. Surface heat exchanger element according to claim 4, **characterised in that** the individual pipe branches have different U-leg lengths (U-longitudinal leg lengths 26a, 26b and U-cross leg lengths 27).

6. Surface heat exchanger element according to claim 1, **characterised in that** at least one branching point (28) is provided at which a branching of the input connection (15) to several pipe branches (19a, 19b, 19c, 19d, 19e, 19f) takes place.

7. Surface heat exchanger element according to claim 6, **characterised in that** the branching point (28) is arranged at the inlet connection (15).

8. Surface heat exchanger element according to claim 6 or 7, **characterised in that** the plurality of pipe branches (19a, 19b, 19c, 19d, 19e) run parallel to one another along a parallel guide region (30a) downstream of the branching point (28) and leave the parallel guide region (30) at different, spaced-apart bending points (31a, 31b).

9. Surface heat exchanger element according to one of the preceding claims, **characterised in that** two strands of rectilinear sections (20a, 20b, 20c, 20d, 20e, 20f) are provided, wherein a first strand can be flooded in a first direction (32) and the second strand can be flooded in the opposite direction (33), wherein the two strands are connected to one another by a central collecting line (34) through which a common flow passes.

10. Surface heat exchanger element according to one of the preceding claims, **characterised in that** the parallel pipe branches (19a, 19b, 19c) between an inlet connection (15) and an outlet connection (16) have the same path length (35).

11. Method for manufacturing a surface heat exchanger element (10) according to one of the preceding claims, comprising the following steps:
a) Providing a support plate (11),
b) providing a pipework system (13) which has a plurality of pipe branches (19a, 19b, 19c, 19d, 19e, 19f) connected in parallel and rectilinear pipe sections (20a, 20b, 20c, 20d, 20e) which are arranged in parallel and have a circular pipe crosssection (24) with an external diameter of between 6 mm and 9 mm,
c) providing a plurality of heat-transfer-plates (14) corresponding to the number of rectilinear pipe sections (20),
d) providing a tool (39) formed from an upper tool (40) and a lower tool (41),
e) rolling the heat transfer plates (14) to obtain a respective pipe section receiving channel (42),
f) inserting the respective heat transfer plate (14) provided with adhesive into the lower tool (41), which has a receptacle (44) for the pipe section receiving channel (42),
g) placing the pipework system (13) on the lower tool (41) and inserting the rectilinear pipe sections (20) into the respective pipe section receiving channel (42), wherein the respective inserted rectilinear pipe section (20) is aligned essentially flush with an upper side (45) of the lower tool (41),
h) closing the tool (39) while pressing the support plate (11) against the heat transfer plates (14) provided with adhesive, whereby the pipe cross-section (24) of the rectilinear pipe sections (20) undergoes no or essentially no change.

## Revendications

1. Élément d'échangeur de chaleur à plaques (10) comprenant une plaque de support (11) sur laquelle est fixé un système de tuyauterie (13) à l'aide de tôles de transfert de chaleur (14a, 14b, 14c, 14d, 14e, 14f, 14g, 14h, 14i, 14j, 14k, 14l), lequel présente un raccord d'entrée (15) et un raccord de sortie (16), le raccord d'entrée et le raccord de sortie, en particulier pour la connexion à d'autres éléments d'échangeur de chaleur à plaques, comportent chacun une section de tuyau de raccordement (17) avec une section transversale de raccordement (18), le système de tuyauterie comportant, dans le trajet entre le raccord d'entrée et le raccord de sortie, au moins deux branches de conduite parallèles (19a, 19b, 19c, 19d, 19e, 19f) avec chacune au moins une section de conduite rectiligne (20a, 20b, 20c, 20d, 20e, 20f, 20g, 20h, 20i, 20j, 20k, 20l), les sections de conduite rectilignes étant disposées immédiatement les unes à côté des autres et étant traversées parallèlement selon une direction d'écoulement commune (22), et **caractérisé en ce que** les sections de conduite présentent une section transversale de tuyau (24) identique, qui est plus petite que la section transversale de raccordement.

2. Élément d'échangeur de chaleur à plaques selon la revendication 1, **caractérisé en ce que** les sections de conduite et/ou les branches de conduite présentent une section transversale comprise entre 6 mm et 9 mm.

3. Élément d'échangeur de chaleur à plaques selon l'une des revendications précédentes, **caractérisé en ce que** plusieurs branches de conduite (19a, 19b, 19c, 19d, 19e) sont montées en parallèle et réparties uniformément le long de la plaque de support (11).

4. Élément d'échangeur de chaleur à plaques selon l'une des revendications précédentes, **caractérisé en ce que** les branches de conduite (19a, 19b, 19c, 19d, 19e) montées en parallèle décrivent une trajectoire essentiellement en forme de U le long de la plaque de support.

5. Élément d'échangeur de chaleur à plaques selon la revendication 4, **caractérisé en ce que** les différentes branches de conduite présentent des longueurs de branches U différentes (longueurs de branches de U longitudinales 26a, 26b et longueurs de branches de U transversales 27).

6. Élément d'échangeur de chaleur à plaques selon la revendication 1, **caractérisé en ce qu'**au moins un point de dérivation (28) est prévu, au niveau duquel une dérivation du raccord d'entrée (15) vers plusieurs branches de conduite (19a, 19b, 19c, 19d, 19e, 19f) est réalisée.

7. Élément d'échangeur de chaleur à plaques selon la revendication 6, **caractérisé en ce que** le point de dérivation (28) est disposé au niveau du raccord d'entrée (15).

8. Élément d'échangeur de chaleur à plaques selon la revendication 6 ou 7, **caractérisé en ce que** les plusieurs branches de conduite (19a, 19b, 19c, 19d, 19e) s'étendent parallèlement les unes aux autres le long d'une zone de guidage parallèle (30a) en aval du point de dérivation (28) et quittent la zone de guidage parallèle (30) à différents points de bifurcation (31a, 31b) espacés les uns des autres.

9. Élément d'échangeur de chaleur à plaques selon l'une des revendications précédentes, **caractérisé en ce que** deux tronçons de sections de conduite rectilignes (20a, 20b, 20c, 20d, 20e, 20f) sont prévus, un premier tronçon pouvant être traversé dans une première direction (32) et le deuxième tronçon dans la direction opposée (33), les deux tronçons étant reliés entre eux par une conduite collectrice centrale (34) traversée conjointement.

10. Élément d'échangeur de chaleur à plaques selon l'une des revendications précédentes, **caractérisé en ce que** les branches de conduite parallèles (19a, 19b, 19c) ont la même longueur de trajet (35) entre un raccord d'entrée (15) et un raccord de sortie (16).

11. Procédé de fabrication d'un élément d'échangeur de chaleur à plaques (10) selon l'une des revendications précédentes, comprenant les étapes suivantes :
a) fourniture d'une plaque de support (11),
b) fourniture d'un système de tuyauterie (13) comprenant plusieurs branches de conduite (19a, 19b, 19c, 19d, 19e, 19f) et des sections de conduite rectilignes (20a, 20b, 20c, 20d, 20e) disposées parallèlement les unes aux autres, qui présentent une section transversale circulaire (24) avec un diamètre extérieur compris entre 6 mm et 9 mm,
c) fourniture d'une pluralité de tôles de transfert thermique (14) correspondant au nombre de sections de conduite rectilignes (20).
d) fourniture d'un outil (39) formé d'un outil supérieur (40) et d'un outil inférieur (41),
e) laminage des tôles de transfert thermique (14) pour obtenir respectivement un canal de réception de section de conduite (42),
f) insertion de la tôle de transfert thermique (14) respective, pourvue d'adhésif, dans l'outil inférieur (41), qui présente un logement (44) pour le canal de réception de section de conduite (42),
g) pose du système de tuyauterie (13) sur l'outil inférieur (41) et insertion des sections de conduite rectilignes (20) dans le canal de réception de section de conduite respectif (42), la section de conduite rectiligne (20) insérée étant alignée de manière sensiblement affleurante avec une face supérieure (45) de l'outil inférieur (41),
h) fermeture de l'outil (39) en pressant la plaque de support (11) contre les tôles de transfert de chaleur (14) pourvues d'adhésif, la section transversale (24) des sections de conduite rectilignes (20) ne subissant aucune modification ou pratiquement aucune modification.
